# EUROPÄISCHE PATENTSCHRIFT

(11) **EP 2 099 659 B1**
(45) Veröffentlichungstag und Bekanntmachung des Hinweises auf die Patenterteilung: **09.03.2011**
(21) Anmeldenummer: 07848044.9
(22) Anmeldetag: 11.12.2007
(51) Int. Cl.: B60R 25/02

(54) **VORRICHTUNG ZUR ANSTEUERUNG EINES SPERRGLIEDES**
DEVICE FOR CONTROLLING A LOCKING ELEMENT
DISPOSITIF DE COMMANDE D'UN ÉLÉMENT DE VERROUILLAGE

(30) Priorität: 11.01.2007 DE 102007002451
(43) Veröffentlichungstag der Anmeldung: 16.09.2009
(73) Patentinhaber: Huf Hülsbeck & Fürst GmbH & Co. KG, 42551 Velbert (DE)
(72) Erfinder: KLEIN, Matthias, 85221 Dachau (DE)
(74) Vertreter: Vogel, Andreas
(86) Internationale Anmeldenummer: PCT/EP2007/063656
(87) Internationale Veröffentlichungsnummer: WO 2008/083888

(56) Entgegenhaltungen:
- EP-A- 0 957 015
- EP-A- 1 157 907
- AU-A- 7 100 081
- DE-C1- 3 227 256

## Beschreibung

Die Erfindung betrifft eine Vorrichtung zur Ansteuerung eines Sperrgliedes eines funktionswesentlichen Bauteils, insbesondere einer Lenksäule oder eines Gangschalthebels eines Kraftfahrzeuges, mit einem Getriebe, das mit dem Sperrglied in mechanischer Wirkverbindung steht, das in eine Verriegelungsstellung und in eine Entriegelungsstellung und umgekehrt bewegbar ist.

Aus der DE 196 231 326 C1 ist eine derartige Vorrichtung zur Ver- und Entriegelung einer Lenksäule eines Kraftfahrzeuges beschrieben. Hierbei werden zwei an einer Antriebswelle befestigte Sperrglieder durch entsprechende Aktivierung eines Motors in die Nuten eines an der Lenksäule befestigten Schließringes hinein- bzw. im Falle der Entriegelung aus den Nuten heraus geschwenkt. Einer der Nachteile dieser Vorrichtung ist, dass ein erheblicher Bauraum benötigt wird.

Eine kompakte Vorrichtung ist in der DE 601 02 979 T2 beschrieben, bei der die Lenksäule eine weitere gattungsbildende Welle enthält, die in einem rohrförmigen Säulenkörper aufgenommen ist, Ein Sperrriegel mit einer länglichen Form ist Innerhalb des Gehäuses der Vorrichtung in Längsrichtung gleitbeweglich gelagert. Ferner ist dieser Sperrriegel quer zur Welle der Lenksäule zwischen einer ersten Stellung und einer zweiten Stellung, in der der Riegel in die Kontur der Welle eingreift, bewegbar. Nachteilig ist, dass relativ große Kräfte notwendig sind, um eine Bewegung des Sperrriegels zu bewirken.

Die EP 0 957 015 A2 offenbart eine Lenkschloessvernegeiung, bei der ein Gleitkörper, der in eine Lenkwelle eingreifen kann, durch einen Kipparmhebel aus der Verriegelungsstellung bewegt wird. Hierbei wird der zweiarmige Kipparmhebel um eine ortsfeste Achse verschwenkt.

In der EP 1 157 907 A2 wird ein Kipphebel selber als Sperrglied verwendet.

Die AU 71000 81 A offenbart den Einsatz von mehreren Bindegliedern zum Betätigen mehrere Türschlösser.

Es Ist Aufgabe der vorliegenden Erfindung, eine Vorrichtung zur Ansteuerung eines Sperrgliedes zu schaffen, bei der die oben genannten Nachteile vermieden werden, insbesondere eine Vorrichtung bereit gestellt wird, die einfach und kompakt gestaltet ist, wobei lediglich eine geringe Kraft erzeugt werden muss, um das Sperrglied In seine entsprechende Stellung zu bewegen.

Dazu ist erfindungsgemäß vorgesehen, dass das Getriebe eine Hebelanordnung aufweist, die zum einen am Sperrglied drehbar gelagert angeordnet ist und zum anderen entlang einer Führung durch eine Antriebseinheit in eine erste und in einer zweite Stellung bringbar ist, wobei während der Bewegung der Hebelanordnung entlang der Führung die Hebelanordnung auf das Sperrglied wirkt, wodurch eine Bewegung des Sperrgliedes in seine entsprechende Stellung erfolgt.

Der wesentliche Vorteil dieser Vorrichtung ist, dass das Getriebe sehr einfach aufgebaut ist, wobei gleichzeitig ein kompakter Aufbau erzielt wird. Die Hebelanordnung dient vorwiegend dazu, dass die Antriebseinheit lediglich eine geringe Eingangskraft aufbringen muss, die auf die Hebelanordnung übertragen wird. Über die konstruktive Ausgestaltung der Hebelanordnung am Sperrglied greift eine relativ große Kraft während der Bewegung der Hebelanordnung auf das Sperrglied an, dass in seine entsprechende Stellung bewegt wird.

Während sich die Hebelanordnung in der ersten Stellung befindet, nimmt das Sperrglied die Verriesetungsstellung ein, bei der das freie Ende des Sperrgliedes in das funktionsweaentliche Bauteil eingreift. Wird nun die Hebelanordnung entlang der Führung über die Antriebseinheit von der ersten Stellung in die zweite Stellung bewegt, übt gleichzeitig die Hebelanordnung eine Kraft auf das Sperrglied aus und drückt gleichzeitig das Sperrglied aus der Verriegelungsstellung in die Entriegelungsstellung. Selbstverständlich kann die Vorrichtung derart ausgeführt sein, dass in der ersten Stellung der Hebelanordnung das Sperrglied sich in der Entriegelungsstellung befindet und in der zweiten Stellung der Hebelanordnung das Sperrglied die Verriegelungsstellung einnimmt.

In der erfindungsgemäßen Vorrichtung weist die Hebelanordnung ein Hebelelement, einen ersten Bereich und einen zweiten Bereich auf, wobei der erste Bereich entlang der Führung bewegbar angeordnet ist und der zweite Bereich mit dem Sperrglied verbunden ist. Hierbei stellt das Hebelelement ein wesentliches Bauteil des Getriebes dar, wobei eine geringe Eingangskraft ausgehend von der Antriebseinheit auf den ersten Bereich der Hebelanordnung zur entsprechenden Bewegung des Sperrgliedes eingebracht werden muss. Gleichzeitig bewegt sich der erste Bereich entlang der Führung, wobei der Winkel zwischen dem Hebelelement und dem Sperrglied sich entsprechend ändert. Hierbei übt der zweite Bereich der Hebelanordnung eine entsprechend hohe Kraft auf das Sperrglied aus, welches von seiner Verriegelungsstellung in die Entriegelungsstellung oder umgekehrt bewegt wird. Besonders vorteilhaft ist es, dass das Getriebe mit der Antriebseinheit und dem Sperrglied durch ein Gehäuse umgeben ist. Die Führung, entlang der die Hebelanordnung bewegbar angeordnet ist, ist erfindungsgemäß als eine lineare Führung ausgebildet. Der erste Bereich und/oder der zweite Bereich der Hebelanordnung können mit dem Hebelelement ein gemeinsames Bauteil bilden. Das bedeutet, dass das Hebelelement mit dem ersten und/oder dem zweiten Bereich einstückig ausgeführt ist. In einer weiteren Ausführungsform der Erfindung können der erste und/oder der zweite Bereich der Hebelanordnung eigenständige Bauteile sein, die mit dem Hebelelement verbunden sind, beispielsweise über ein Gelenk.

Vorzugsweise umfasst die Antriebseinheit einen elektrischen Motor, der ein Zwischenelement antreibt, das auf die Hebelanordnung, insbesondere auf den ersten Bereich der Hebelanordnung wirkt. In einer möglichen Ausführungsform der Erfindung kann das Zwischenelement als Spindel ausgeführt sein. Hierbei treibt der elektrische Motor die Spindel an. Der erste Bereich der Hebelanordnung, der gelenkartig mit dem Hebelelement verbunden ist, weist vorzugsweise eine Bohrung mit einem Gewinde auf, mit dem die Spindel im Eingriff ist. Vorteilhafterweise ist die Spindel als zylindrischer Rundstab ausgeführt, auf dem ein Gewinde, beispielsweise ein Trapez- oder Flachgewinde aufgebracht ist. Gleichzeitig weist die Bohrung ein entsprechendes Innengewinde auf, in dem die Spindel aufgenommen ist. Während des Antriebes wird die Spindel in eine drehende Bewegung gebracht, die in eine translatorische Bewegung des ersten Bereiches der Hebelanordnung entlang der Führung umgewandelt wird. Hierdurch wird das Hebelelement verschwenkt, wodurch eine entsprechende Bewegung des Sperrgliedes ausgelöst wird.

Vorteilhafterweise kann eine gelenkartige Verbindung zwischen dem ersten Bereich der Hebelanordnung und der Spindel vorgesehen sein. Diese Ausführungsform kann derart ausgebildet sein, dass die Spindel um ihre Achse rotiert und gleichzeitig sich entlang der Führung bewegt. Durch die gelenkartige Verbindung zwischen dem ersten Bereich der Hebelanordnung, der vorzugsweise einstückig mit dem Hebelelement verbunden ist, und der Spindel bewegt sich der erste Bereich der Hebelanordnung entlang der Führung, wodurch eine entsprechende Ver- oder Entriegelung des funktionswesentlichen Bauteiles erzielbar ist. Die Bewegung der genannten gelenkartigen Verbindung kann alternativ über ein einfaches Gestänge erfolgen, das auf den ersten Bereich der Hebelanordnung wirkt und über einen Motor translatorisch bewegt wird.

In einer weiteren Ausgestaltung der Erfindung ist das Zwischenelement als Steuerscheibe mit mindestens einem Steuernocken ausgeführt, wobei der Steuernocken auf den ersten Bereich der Hebelanordnung während der Bewegung des Sperrgliedes wirkt. Die Steuerscheibe wird durch die Antriebseinheit in Bewegung gesetzt, wodurch sich die Steuerscheibe um eine Achse dreht. Vorzugsweise ist am Randbereich der Steuerscheibe der Steuernocken ausgeführt, der in einem definierten Winkelbereich der Steuerscheibe unmittelbar auf den ersten Bereich der Hebelanordnung eine Kraft ausübt. In einer bevorzugten Ausführungsform der Erfindung ist das Hebelelement mit dem ersten und dem zweiten Bereich ausgeführt, wobei das Hebelelement, der erste und der zweite Bereich ein gemeinsames, materialeinheitliches Bauteil bilden.

Vorteilhafterweise sind das Sperrglied, das Hebelelement sowie der erste und der zweite Bereich der Hebelanordnung aus einem Metall, insbesondere als Stahl hergestellt. Die Materialdicke ist dabei so bemessen, dass weitestgehend eine Materialzerstörung ausgeschlossen werden kann. In einer alternativen Ausführungsform können die genannten Bauteile in Spritzgusstechnik hergestellt sein. Vorteilhafterweise ist das freie Ende des Sperrgliedes in seiner Kontur abgerundet und/oder angeschrägt ausgeführt, wodurch ein Einrasten des Sperrgliedes in eine Nut des funktionswesentlichen Bauteils erleichtert wird.

Die erfindungsgemäße Vorrichtung kann als elektrische Lenkungsverriegelung für Fahrzeuge zum Einsatz kommen, wobei die Vorrichtung zudem problemlos mit insbesondere so genannten "Keyless-Entry"-Systemen kombinierbar ist. Die erfindungsgemäße Vorrichtung kann von außen beispielsweise per Funksignal oder nach einem stattgefundenen Datenaustausch aktiviert werden. Dabei ermöglicht die Erfindung selbstverständlich eine Rückmeldung dahingehend, ob die betreffende Vorrichtung zuverlässig das funktionsweseritliche Bauteil, insbesondere die Lenksäule oder den Gangschalthebel des Kraftfahrzeuges, blockiert oder nicht. Dies kann zum Beispiel durch eine optische oder akustische Meldevorrichtung dargestellt werden.

Es kann vorgesehen sein, dass die Vorrichtung zur Ansteuerung des Sperrgliedes durch eine Steuerelektronik überwacht wird. Aus sicherheitstechnischen Gründen ist es vorteilhaft, wenn neben der Erfassung des Hubweges des Hebelelementes auch die Position des Sperrgliedes erfasst wird. Dieses kann beispielsweise durch Sensoren erfolgen, die entsprechend innerhalb des Gehäuses der Vorrichtung positioniert sind. Dadurch kann eine elektronische Steuerung die Funktionsfähigkeit der mechanischen Kopplung zwischen dem Hebelelement und dem Sperrglied überwachen, sowie eine Manipulation erkennen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Ansteuerung eines Sperrgliedes an einer Lenksäule,
- Fig. 2: eine mögliche Ausführungsform der Antriebseinheit der Vorrichtung gemäß Figur 1,
- Fig. 3: eine weitere Ausführungsform der Antriebseinheit der Vorrichtung gemäß Figur 1 und
- Fig. 4: eine weitere Alternative der Antriebseinheit der Vorrichtung gemäß Figur 1.

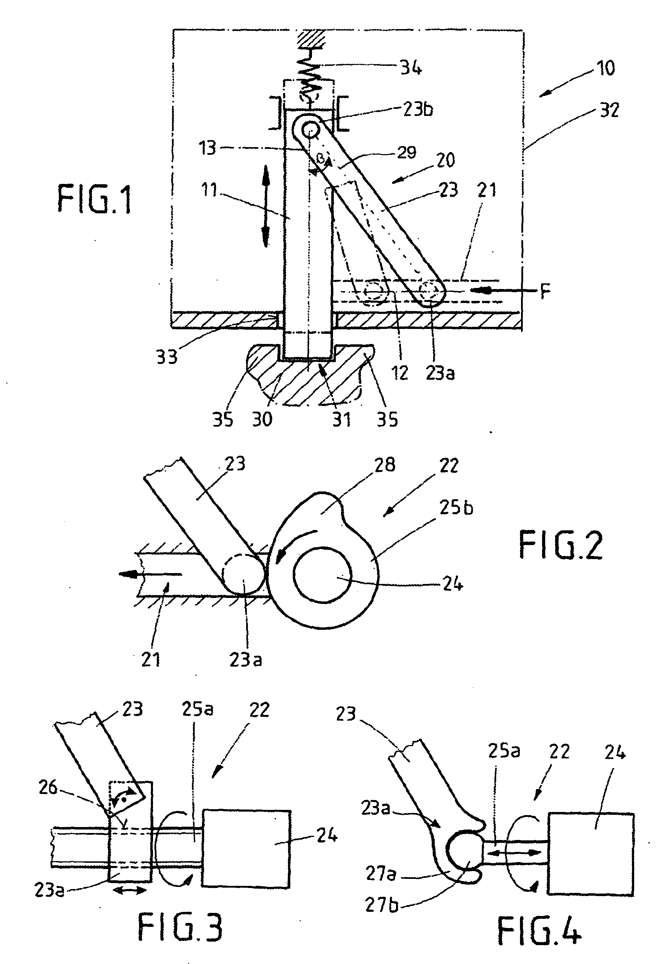

Figur 1 zeigt rein schematisch eine erste Ausführungsform einer Vorrichtung 10 zur Steuerung eines Sperrgliedes 11 eines funktionswesentlichen Bauteiles 30. Hierbei handelt es sich bei dem Bauteil 30 um eine Lenksäule 30 eines Kraftfahrzeuges. Die Vorrichtung 10 weist ein Getriebe auf, das mit dem Sperrglied 11 in mechanischer Wirkverbindung steht, wobei das Sperrglied 11 sich in Figur 1 in einer Verriegelungsstellung befindet. Das Sperrglied 11 ragt mit seinem freien Ende in die Nut 31 der Lenksäule 30 ein, wodurch die Lenksäule 30 gesperrt ist.

Das Getriebe weist eine Hebelanordnung 20 auf, die ein Hebelelement 23 mit umfasst, das zum einen am Sperrglied 11 drehbar gelagert angeordnet ist. Zum anderen ist das Hebelelement 23 in einer Führung 21 durch eine Antriebseinheit in eine erste und in eine zweite Stellung bewegbar. Hierbei ist das Hebelelement 23 mit einem ersten Bereich 23a und einem zweiten Bereich 23b ausgeführt. Der erste Bereich 23a ist innerhalb der Führung bewegbar angeordnet. Der zweite Bereich 23b ist mit dem Sperrglied 11 drehbar gelagert verbunden. In dem dargestellten Ausführungsbeispiel ist die Führung 21 linearförmig ausgeführt. Der erste Bereich 23a des Hebelelementes 23 ist entlang einer ersten Achse 12 in der Führung 21 bewegbar. Gleichzeitig erfolgt eine Bewegung des Sperrgliedes 11 entlang einer zweiten Achse 13. Über den dargestellten Pfeil in Figur 1, der auf den ersten Bereich 23a des Hebelelementes 23 gerichtet ist, kann über die Antriebseinheit eine Kraft auf die Hebelanordnung 20 ausgeübt werden, um eine Bewegung des ersten Bereiches 23a innerhalb der Führung 21 zu bewirken. Die zweite Achse 13 ist in der dargestellten Ausführungsform senkrecht zur ersten Achse 12 ausgerichtet. Der Winkel zwischen der ersten Achse 12 und der zweiten Achse 13 kann jedoch in einer nicht gezeigten Alternative der Erfindung von 90° abweichen, das bedeutet, dass der Winkel, insbesondere in Abhängigkeit von den kinematischen Anforderungen beliebig gewählt werden kann.

Gemäß Figur 1 befindet sich die Hebelanordnung 20, insbesondere das Hebelelement 23 in einer ersten Stellung. Wird nun entsprechend der Pfeilrichtung eine Kraft auf das Hebelelement 23 innerhalb der Führung 21 ausgeübt, bewegt sich der erste Bereich 23a innerhalb der Führung 21 nach links in Richtung des Sperrgliedes 11. Der Abstand zwischen dem ersten Bereich 23a und dem Sperrglied 11 verringert sich. Gleichzeitig verringert sich der Winkel zwischen dem Hebelelement 23 und der zweiten Achse 13. Der zweite Bereich 23b übt eine Kraft auf das Sperrglied 11 aus, die entgegengesetzt zur Nut 31 der Lenksäule 30 gerichtet ist. Durch die nach oben wirkende Kraft wird das Sperrglied 11 aus seiner Verriegelungsstellung in eine Entriegelungsstellung bewegt, bei der das freie Ende des Sperrgliedes 11 nicht mehr im Eingriff mit der Nut 31 ist, sondern einen definierten Abstand zur Lenksäule 30 aufweist. Die Entriegelungsstellung ist in Figur 1 strichpunktartig angedeutet. In einer nicht explizit gezeigten Darstellung kann während der Bewegung der Hebelanordnung 20 von der ersten in die zweite Stellung das Sperrglied 11 von einer Entriegelungsstellung in eine Verriegelungsstellung geführt werden.

Das Getriebe ist mit der Antriebseinheit und dem Sperrglied 11 durch ein Gehäuse 32 umgeben. Hierbei weist das Gehäuse 32 eine Öffnung 33 auf, durch die das Sperrglied 11 in Verriegelungsstellung mit seinem freien Ende hindurchragt und in die Nut 31 der Lenksäule 30 eingreift. Ferner greift an der der Nut 31 abgewandten Seite des Sperrgliedes 11 ein Federelement 34 an, das am Gehäuse 32 befestigt ist.

Während der erste Bereich 23a des Hebelelementes 23 von seiner ersten in seine zweite Stellung bewegt wird, wirkt gleichzeitig eine entsprechende Rückstellkraft ausgehend vom Federelement 34 auf das Sperrglied 11. Falls während des Verriegelungsvorganges die Nut 31 der Lenksäule 30 nicht die korrekte Position für das Sperrglied 11 aufweist, das bedeutet, dass beispielsweise das freie Ende des Sperrgliedes 11 auf einen Zahn 35 der Lenksäule 30 trifft, federt das Sperrglied 11 über das Federelement 34 nach oben ab. Der Benutzer braucht nur noch die Lenksäule 30 ein wenig zu bewegen, bis die Nut 31 ihre korrekte Position erreicht hat. In dieser Position drückt das Federelement 34 das Sperrglied 11 in die Nut 31, wodurch das Sperrglied 11 in der Lenksäule 30 einrastet. Um eine zuverlässige Bewegung des Sperrgliedes 11 entlang der zweiten Achse 13 zu gewährleisten, ist eine nicht dargestellte Lagerung innerhalb des Gehäuses 32 vorgesehen.

Für den Verriegelungsvorgang übt die Antriebseinheit 22 eine Kraft auf den ersten Bereich 23a des Hebelelementes 23 aus, die nach rechts gerichtet ist. Der erste Bereich 23a des Hebelelementes 23 wird nach rechts entlang der Führung 21 bewegt, wobei der Abstand zwischen dem erstem Bereich 23a und dem Sperrglied 11 sich vergrößert. Gleichzeitig vergrößert sich der Winkel zwischen der zweiten Achse 13 und dem Hebelelement 23. Der zweite Bereich 23b des Hebelelementes 23 übt gleichzeitig eine Kraft auf das Sperrglied 11 aus, die in Richtung der Nut 31 gerichtet ist. Hierdurch wird das freie Ende des Sperrgliedes 11 in die Nut 31 geführt, wodurch die Lenksäule 30 in den Verriegelungszustand gelangt. Alternativ kann lediglich die Kraft ausgehend vom Federelement 34 ausreichend sein, um den Verriegelungsvorgang auszuführen. Das bedeutet, dass die Antriebseinheit keine Kraft auf den ersten Bereich 23a ausüben muss.

Die Antriebseinheit 22 für die erfindungsgemäße Vorrichtung 11 kann unterschiedliche Ausgestaltungsformen aufweisen, die im Folgenden beispielhaft dargestellt sind:
Gemäß Figur 2 weist die Antriebseinheit 22 einen elektrischen Motor 24 auf, der eine Steuerscheibe 25b antreibt. Am Außenbereich der Steuerscheibe 25b ist ein Steuernocken 28 angeordnet, der auf den ersten Bereich 23a des Hebelelementes 23 wirkt. Wird nun die Steuerscheibe 25b gegen den Uhrzeigersinn angetrieben, drückt der Steuernocken 28 den ersten Bereich 23a des Hebelelementes 23 entlang der Führung 21 nach links, wodurch gemäß Figur 1 der zweite Bereich 23b eine entsprechende Kraft auf das Sperrglied 11 ausübt, das sich nach oben von der Verriegelungsstellung in die Entriegelungsstellung bewegt.

Alternativ kann die Antriebseinheit 22 mit einem elektrischen Motor 24 ausgeführt sein, der eine Spindel 25a antreibt, die mit einem Außengewinde ausgeführt ist, welches in Figur 3 gezeigt ist. Der erste Bereich 23a der Hebelanordnung 20 weist eine Bohrung 26 mit einem Innengewinde auf, mit dem die Spindel 25a im Eingriff ist. Der erste Bereich 23a ist im Gegensatz zu den Ausführungsbeispielen gemäß Figur 1, 2 und 4 ein eigenständiges Bauteil zum Hebelelement 23, wobei der erste Bereich 23a gelenkartig mit dem Hebelelement 23 verbunden ist, welches schematisch in Figur 3 angedeutet ist. Wie zu erkennen ist, erstreckt sich die Spindel 25a durch die Bohrung 26. Während der elektrische Motor 24 die Spindel 25a antreibt, erfolgt je nach Drehbewegung der Spindel 25a eine Bewegung des ersten Bereiches 23a entlang des Gewindes der Spindel 25a. Der erste Bereich 23a bewegt sich somit entlang der Erstreckung der Spindel 25a, welches durch den Doppelpfeil in Figur 3 gezeigt ist. Durch ein entsprechendes Verschwenken des Hebelelementes 23 wird gemäß Figur 1 eine entsprechende Bewegung des Sperrgliedes 11 ausgelöst. Eine translatorische Bewegung der Spindel 25a erfolgt nicht.

Eine weitere Alternative ist in Figur 4 dargstellt, bei der die Antriebseinheit 22 einen elektrischen Motor 24 umfasst, der eine Spindel 25a antreibt. Bei dieser Ausführungsform bewegt sich die Spindel 25a rotatorisch und zusätzlich translatorisch entlang der ersten Achse gemäß Figur 1. Am freien Ende der Spindel 25a ist ein Gelenk 27a,27b vorgesehen, dass die Spindel 25a mit dem Hebelelement 23 verbindet. Das freie Ende der Spindel 25a ist im vorliegenden Ausführungsbeispiel als Kugel 27b ausgeführt und der erste Bereich 23a des Hebelelementes 23 als Pfanne 27a. Bei einer Bewegung der Spindel 25a entlang der ersten Achse 12 innerhalb der Führung 21 erfolgt eine Bewegung des Hebelelementes 23, wodurch eine entsprechende Bewegung des Sperrgliedes 11 gemäß Figur 1 ausgelöst wird.

In den Ausführungsbeispielen können das Sperrglied, sowie das Hebelelement 23, Spritzgussteile aus Kunststoff oder aus Metall sein. Obgleich die erfindungsgemäße Vorrichtung 10 anhand der Figuren als Lenkradverriegelung in einem Kraftfahrzeug erläutert wurde, ist der Einsatz der Erfindung nicht allein auf diese Anwendung beschränkt. Vielmehr kann diese Vorrichtung überall dort zum Einsatz kommen, wo drehbare Achsen oder Wellen schaltbar blockiert werden sollen, beispielsweise zur Sicherung von drehbaren elektromechanischen Schaltwerken.

Einer der besonderen Merkmale aller dargestellten Ausführungsformen ist, dass lediglich eine geringe Kraft auf das Hebelelement 23, insbesondere auf den ersten Bereich 23a ausgeübt werden muss, um eine entsprechende Bewegung des Sperrgliedes 11 auszulösen. Durch den kleinen Winkel β - sowohl in der ersten als auch in der zweiten Stellung der Hebelanordnung 20 - zwischen der ersten Achse 13 (Sperrbolzenlängsachse) und der Längsachse 29 des Hebelelementes 23 wird die in das Hebelelement 23 eingebrachte Kraft verstärkt, die anschließend in Richtung der zweiten Achse 13 auf den Sperrbolzen 11 wirkt. Bevorzugt ist der Winkel β zwischen der ersten Achse 13 und der Längsachse 29 des Hebelelementes 23 geringer als 45°.

### Bezugszeichenliste

- 10: Vorrichtung
- 11: Sperrglied
- 12: erste Achse
- 13: zweite Achse

- 20: Hebelanordnung
- 21: Führung
- 22: Antriebseinheit
- 23: Hebelelement
- 23a: erster Bereich der Hebelanordnung 20
- 23b: zweiter Bereich der Hebelanordnung 20
- 24: Motor
- 25a: Zwischenelement, Spindel
- 25b: Zwischenelement, Steuerscheibe
- 26: Bohrung
- 27a: Gelenk, Pfanne
- 27b: Gelenk, Kugel
- 28: Steuernocken
- 29: Längsachse des Hebelelementes 23

- 30: funktionswesentliches Bauteil, Lenksäule
- 31: Nut
- 32: Gehäuse
- 33: Öffnung
- 34: Federelement
- 35: Zahn

## Patentansprüche

1. Vorrichtung (10), mit der ein Sperrglied (11) eines funktionewesentlichen Bauteils (30), das als eine Lenksäule (30) oder ein Gangschalthebel eines Kraftfahrzeuges ausgebildet ist, ansteuerbar ist, mit
einem Getriebe, das mit dem Sperrglied (11) in mechanischer Wirkverbindung steht, das in eine Verriegelungsstellung und in eine Entrlegelungsstellung und umgekehrtbewegbar ist, wobei
das Getriebe eine Hebelanordnung (20) aufweist, **dadurch gekennzeichnet, dass** die Hebelanordnung zum einen am Sperrglied (11) drehbar gelagert angeordnet ist und zum anderen entlang einer linearen Führung (21) durch eine Antriebseinheit (22) In eine erste und In einer zweite Stellung bringbar ist, wobei während der Bewegung der Hebelanordnung (20) entlang der linearen Führung, (21) die Hebelanordnung (20) auf das Sperrglied (11) wirkt, wodurch eine Bewegung des Sperrgliedes (11) in seine entsprechende Stellung erfolgt,
wobei die Hebelanordnung (20) ein Hebelelement (23), einen ersten Bereich (23a) und einen zweiten Bereich (23b) aufweist, wobei der erste Bereich (23a) entlang der Führung (21) bewegbar angeordnet ist und der zweite Bereich (23b) mit dem Sperrglied (11) verbunden ist
und wobei der erste Bereich (23a) der Hebelanordnung (20) entlang einer ersten Achse (12) in der Führung (21) bewegbar ist, wobei gleichzeitig eine Bewegung des Sperrgliedes (11) entlang einer zweiten Achse (13) erfolgt.

2. Vorrichtung (10) nach Anspruch 1,
**dadurch gekennzeichnet,**
**dass** die Verbindung zwischen dem zweiten Bereich (23b) der Hebelanordnung (20) und dem Sperrglied (11) gelenkartig ausgeführt ist.

3. Vorrichtung (10) nach Anspruch 1 oder 2,,
**dadurch gekennzeichnet,**
**dass** die Antriebseinheit (22) einen elektrischen Motor (24) umfasst, der ein Zwischenelement (25a, 25b) antreibt, das auf die Hebelanordnung (20), insbesondere auf den ersten Bereich (23a) der Hebelanordnung (20) wirkt.

4. Vorrichtung (10) nach Anspruch 3,
**dadurch gekennzeichnet,**
**dass** das Zwischenelement (25a) eine Spindel (26a) ist.

5. Vorrichtung (10) nach Anspruch 4,
**dadurch gekennzeichnet,**
**dass** der erste Bereich (23a) der Hebelanordnung (20), der gelenkartig mit dem Habelelement (23) verbunden ist, eine Bohrung (26) mit einem Gewinde aufweist, mit dem die Spindel (25a) im Eingriff ist.

6. Vorrichtung (10) nach einem der Ansprüche 4 oder 5,
**dadurch gekennzeichnet,**
**dass** eine gelenkartige Verbindung (27a,27b) zwischen dem ersten Bereich (23a) der Hebelanordnung (20) und der Spindel (25a) vorgesehen ist.

7. Vorrichtung (10) nach einem der Ansprüche 1 bis 3,
**dadurch gekennzeichnet,**
**dass** das Zwischenelement (25b) als Steuerscheibe (25) mit einem Steuernocken (28) ausgeführt ist, wobei der Steuernocken (28) auf den ersten Bereich (23a) der Hebelanordnung (20) während der Bewegung des Sperrgliedes (11) wirkt.

8. Vorrichtung (10) nach einem der vorhergehenden Ansprüche,
**dadurch gekennzeichnet,**
**dass** das Sperrglied (11) an der dem funktionswesentlichen Bauteil (30) abgewandten Seite federbelastet ist.

9. Vorrichtung (10) nach einem der vorhergehenden Ansprüche,
**dadurch gekennzeichnet,**
**dass** der erste Bereich (23a) und/oder der zweite Bereich (23b) der Hebelanordnung (20) mit dem Hebelelement (23) ein gemeinsames Bauteil bilden.

10. Vorrichtung (10) nach einem der vorhergehenden Ansprüche,
**dadurch gekennzeichnet,**
**dass** das Hebelelement (23) eine Längsachse (29) aufweist, wobei sowohl in der ersten als auch In der zweiten Stellung der Hebelanordnung (20) die zweite Achse (13) des Sperrgliedes (11) und die Längsachse (29) in einem Winkel β zueinander ausgerichtet sind, der geringer ist als 45°.

## Claims

1. A device (10) with which it is possible to control a locking element (11) of a functionally significant component (30) which is configured as a steering column (30) or a gear shift lever of a motor vehicle, with
a mechanism which is in mechanical operative connection with the locking element (11), which can be moved into a blocking position and into an unblocking position and vice versa, whereby
the mechanism has a lever arrangement (20), **characterised in that** the lever arrangement is on the one hand arranged to be rotatably borne at the locking element (11) and on the other hand can be brought into a first and into a second position along a linear guide (21) by a drive unit (22), whereby, during the movement of the lever arrangement (20) along the linear guide (21), the lever arrangement (20) acts on the locking element (11), as a result of which a movement of the locking element (11) into its corresponding position takes place, whereby the lever arrangement (20) has a lever member (23), a first region (23a) and a second region (23b), whereby the first region (23a) is arranged movably along the guide (21) and the second region (23b) is connected to the locking element (11),
and whereby the first region (23a) of the lever arrangement (20) is movable along a first axis (12) in the guide (21), whereby at the same time a movement of the locking element (11) takes place along a second axis (13).

2. The device (10) according to Claim 1,
**characterised in that**
the connection between the second region (23b) of the lever arrangement (20) and the locking element (11) is configured in an articulated manner.

3. The device (10) according to claim 1 or 2,
**characterised in that**
the drive unit (22) includes an electric motor (24), which drives an intermediate member (25a, 25b) acting on the lever arrangement (20), in particular on the first region (23a) of the lever arrangement (20).

4. The device (10) according to Claim 3,
**characterised in that**
the intermediate member (25a) is a spindle (25a).

5. The device (10) according to Claim 4,
**characterised in that**
the first region (23a) of the lever arrangement (20), which is connected to the lever member (23) in an articulated manner, has a borehole (26) with a thread which the spindle (25a) engages.

6. The device (10) according to one of claims 4 or 5,
**characterised in that**
an articulation-like connection (27a, 27b) is provided between the first region (23a) of the lever arrangement (20) and the spindle (25a).

7. The device (10) according to one of claims 1 to 3,
**characterised in that**
the intermediate member (25b) is configured as a control disc (25) with a control cam (28), whereby the control cam (28) acts on the first region (23a) of the lever arrangement (20) during the movement of the locking element (11).

8. The device (10) according to one of the preceding claims,
**characterised in that**
the locking element (11) is spring-loaded at the side facing away from the functionally significant component (30).

9. The device (10) according to one of the preceding claims,
**characterised in that**
the first region (23a) and/or the second region (23b) of the lever arrangement (20) forms a common component with the lever member (23).

10. The device (10) according to one of the preceding claims,
**characterised in that**
the lever member (23) has a longitudinal axis (29), whereby, both when the lever arrangement (20) is in the first and when it is in the second position, the second axis (13) of the locking element (11) and the longitudinal axis (29) are oriented relative to one another at an angle β, which is smaller than 45°.

## Revendications

1. Dispositif (10), avec lequel peut être asservi un organe de blocage (11) d'un élément fonctionnellement essentiel (30) qui se présente sous la forme d'une colonne de direction (30) ou d'un levier de changement de vitesses d'un véhicule automobile, comprenant
un mécanisme de transmission, qui se trouve en liaison fonctionnelle mécanique avec l'organe de blocage (11) et qui peut être déplacé entre une position de verrouillage et une position de déverrouillage et réciproquement, sachant que le mécanisme de transmission présente un ensemble formant levier (20),
**caractérisé en ce que** l'ensemble formant levier, d'une part est disposé monté à rotation sur l'organe de blocage (11), et d'autre part peut être amené le long d'un guide linéaire (21), par une unité d'entraînement (22), dans une première position et dans une deuxième position,
sachant que pendant le déplacement de l'ensemble formant levier (20) le long du guide linéaire (21), l'ensemble formant levier (20) agit sur l'organe de blocage (11), de sorte que l'organe de blocage (11) se déplace dans sa position correspondante,
sachant que l'ensemble formant levier (20) présente un élément formant levier (23), une première région (23a) et une deuxième région (23b), sachant que la première région (23a) est disposée à déplacement le long du guide (21) et que la deuxième région (23b) est reliée à l'organe de blocage (11),
et sachant que la première région (23a) de l'ensemble formant levier (20) peut être déplacée le long d'un premier axe (12) dans le guide (21), sachant qu'un déplacement de l'organe de blocage (11) le long d'un deuxième axe (13) a simultanément lieu.

2. Dispositif (10) selon la revendication 1, **caractérisé en ce que** la liaison entre la deuxième région (23b) de l'ensemble formant levier (20) et l'organe de blocage (11) est réalisée articulée.

3. Dispositif (10) selon la revendication 1 ou 2, **caractérisé en ce que** l'unité d'entraînement (22) comprend un moteur électrique (24) qui entraîne un élément intermédiaire (25a, 25b) qui agit sur l'ensemble formant levier (20), en particulier sur la première région (23a) de l'ensemble formant levier (20).

4. Dispositif (10) selon la revendication 3, **caractérisé en ce que** l'élément intermédiaire (25a) est une broche (25a).

5. Dispositif (10) selon la revendication 4, **caractérisé en ce que** la première région (23a) de l'ensemble formant levier (20), qui est reliée de manière articulée à l'élément formant levier (23), présente un perçage (26) pourvu d'un filetage avec lequel la broche (25a) est en prise.

6. Dispositif (10) selon l'une des revendications 4 ou 5, **caractérisé en ce qu'**il est prévu une liaison articulée (27a, 27b) entre la première région (23a) de l'ensemble formant levier (20) et la broche (25a).

7. Dispositif (10) selon l'une des revendications 1 à 3, **caractérisé en ce que** l'élément intermédiaire (25b) est réalisé sous forme de disque de commande (25b) doté d'une came de commande (28), sachant que la came de commande (28) agit sur la première région (23a) de l'ensemble formant levier (20) pendant le déplacement de l'organe de blocage (11).

8. Dispositif (10) selon l'une des revendications précédentes, **caractérisé en ce que** l'organe de blocage (11) est sollicité par ressort sur le côté opposé à l'élément fonctionnellement essentiel (30).

9. Dispositif (10) selon l'une des revendications précédentes, **caractérisé en ce que** la première région (23a) et/ou la deuxième région (23b) de l'ensemble formant levier (20) forment une seule pièce avec l'élément formant levier (23).

10. Dispositif (10) selon l'une des revendications précédentes, **caractérisé en ce que** l'élément formant levier (23) présente un axe longitudinal (29), sachant que tant dans la première position que dans la deuxième position de l'ensemble formant levier (20), le deuxième axe (13) de l'organe de blocage (11) et l'axe longitudinal (29) sont orientés l'un par rapport à l'autre sous un angle β qui est inférieur à 45°.
